# EUROPEAN PATENT SPECIFICATION

(11) **EP 0 705 374 B1**
(45) Date of publication and mention of the grant of the patent: **17.09.1997**
(21) Application number: 93916340.8
(22) Date of filing: 24.06.1993
(51) Int. Cl.: E04B 1/78

(54) **HEAT INSULATING EXTERNAL WALL FOR BUILDINGS**
WÄRMEISOLIERENDE AUSSENWAND FÜR GEBÄUDE
PAROI EXTERNE THERMO-ISOLANTE POUR BATIMENTS

(43) Date of publication of application: 10.04.1996
(73) Proprietor: SKANSKA TEKNIK AB, S-211 02 Malmö (SE)
(72) Inventor: ANDERSSON, Kurt, Allan, S-230 30 Oxie (SE); CARLSSON, Tage, S-291 66 Kristianstad (SE)
(74) Representative: Hellborg, Torild
(86) International application number: SE9300569
(87) International publication number: WO9500722

(56) References cited:
- DE-A- 2 009 002
- DE-A- 3 530 884
- SE-B- 300 297
- SE-B- 403 640

## Description

The invention relates to a heat-insulating external wall for a building, in accordance with the preamble of Claim 1. Walls of this general type are, for example, known from DE-A-3 530 884.

The basic technical requirements placed on conventional external walls of buildings is that the walls shall function as a climate shell in the building, and that they possibly shall also have a load-bearing capacity. With regard to its function as a climate shell, the heat-insulating capacity of external walls has constantly increased in significance in recent years. In this regard, the heat-insulating capacity has been increased by increasing the thickness of the insulating layer in the wall. However, it is not always possible to enhance insulation with the aid of applied, thick insulating layers. This applies particularly when providing additional insulation internally in existing buildings, since this may change the moisture and heat balance of the wall unfavourably.

With the intention of improving heat-insulation capacity without increasing the thickness of the insulating layer, it has earlier been proposed to lead an airstream from outside the building in through the wall, so as to counteract the transmission of heat through the wall. However, this has been found difficult to achieve and problems encountered with guiding the air flow in earlier construction proposals have hitherto prevented so-called dynamic insulation concepts from being used generally in conjunction with walls.

The object of the invention is to provide a heat-insulating external wall which is a further development of the aforedescribed concepts of dynamic insulation, and it is the intention that the inventive wall, in addition to improving insulation capacity, shall also be used for ventilating the building interior and for filtering and pre-heating the through-passing air, so that the ventilation air flowing into the building will be held attemperated and free from particles that may be harmful to people suffering from allergies. This object is achieved by constructing the wall in accordance with the features set forth in the characterizing clause of Claim 1.

Suitable embodiments of the inventive wall are defined in the subordinate Claims.

The invention will now be described in more detail with reference to different embodiments of an inventive wall and also with reference to the accompanying drawings, in which
Figure 1 is a schematic cross-sectional view of a wall intended for a new building and constructed in accordance with a first embodiment of the invention;
Figure 2 is a schematic, cross-sectional view of a wall intended for internal additional or supplementary insulation in existing buildings and constructed in accordance with a second embodiment of the invention;
Figure 3 is a partially cut-away perspective view of a wall constructed in accordance with a third embodiment of the invention; and
Figure 4 is a sectional view of the wall shown in Figure 3.

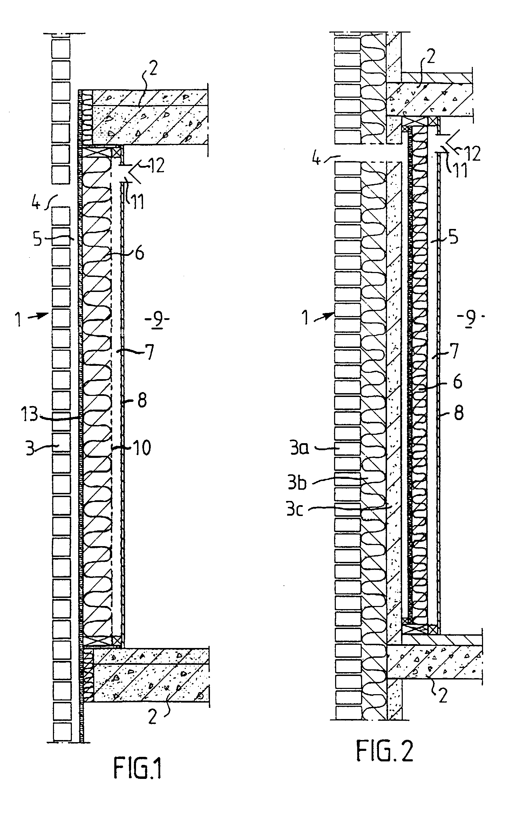

Figure 1 is a cross-sectional view of an external wall 1 for a building, of which only parts of two floor structures 2 are shown together with said walls.

The external wall 1 includes an outer lining or facing layer 3, which forms the outside of the wall and which is shown in Figure 1 to be a brick wall. However, the outer facing layer 3 may be built from other suitable materials, such as concrete, sheets of different kinds or wood panelling. The outer facing layer 3 is also provided with at least one inlet opening 4, which may be fitted with a grid or insect net (not shown).

Provided inwardly of the outer facing layer 3 is an outer air gap 5 which extends over the whole surface of the wall 1. Provided inwardly of the outer air gap 5 is an insulating layer 6 which forms the main insulation in the wall 1 and which is preferably comprised of mineral wool. Located inwardly of the insulating layer 6 is an inner air gap 7, which is delimited outwardly by an inner facing or lining layer 8, which forms the inside of the wall 1 and delimits the wall against the building interior 9.

In accordance with the invention, there is also provided a distributing layer 10, which in the case of the Figure 1 embodiment is disposed as the inner defining surface of the insulating layer 6.

The inner facing layer 8 is a dense or impervious layer which is provided in the vicinity of its upper end with an outlet opening 11. Mounted in the opening 11 is a flow control device 12 which functions to control the flow of air through the outlet opening 11.

The external wall illustrated in Figure 1 functions as follows: A subpressure is generated in the building interior 9 in a known manner. The devices used to this end form no part of the present invention and are therefore not shown in the drawings. As a result of the subpressure prevailing in the building interior 9, ambient air is drawn in through the inlet opening 4 by suction and is distributed in the outer air gap 5. The air passes from the gap through an outer layer 13, through the insulating layer 6 and through the distribution layer 10 and into the inner air gap 7, from where the air through the outlet opening sprays into the building interior 9. The flow is controlled by the flow control device 12, which also prevents the air from flowing in the wrong direction. The distribution layer 10, which in the case of the Figure 1 embodiment is disposed on the inside of the insulating layer 6, is comprised of a material which is generally impervious to air, and is provided with a large number of small perforations (similar to needle holes), which are distributed over the whole surface of the distributing layer 10. These perforations are so formed that the airflow passing through the insulating layer 6 is distributed generally uniformly over the whole surface of the insulating layer 6. The inwardly directed flow through the insulating layer 6, said flow having a very low rate of flow, will absorb the heat which is transmitted through the wall 1 from the building interior 9. The inner air gap 7 will thus contain preheated air, which is then delivered to the building interior 9 through the narrow outlet opening 11. The heat-insulating capacity of the wall 1 is thus better than if the insulating layer 6 were to be used without a flow of air therethrough.

When the insulating layer 6 is comprised of material that has good filtering properties, such as mineral wool for instance, the insulating layer 6 will also function as a filter for the passing air. This filter will have a very large surface area and thickness and the air moves very slowly through the filter, thereby imparting very good filtering ability to the filter. The air exiting through the outlet opening 11 will therefore be very clean.

As will be understood from the aforegoing, the inventive external wall 1 will fulfil the conventional function of forming part of the shell of the building, and also the additional function of providing a highly effective filter for ventilation air passing to the interior of the building, wherewith the wall will also have an improved heat-insulating capacity because the ventilation air that passes through the wall will take up at least some of the heat which would otherwise be lost to the surroundings, whereby the inflowing air is also attemperated and delivered to the room in a soundless and draught-free fashion.

Figure 2 illustrates an external wall 1 which is of the same principle construction as the external wall 1 illustrated in Figure 1. However, the external wall 1 of the Figure 2 embodiment is comprised of an external wall of an existing building with internal additional or supplementary insulation, in accordance with the invention. Those parts which find correspondence in Figure 1 have been identified in Figure 2 with the same reference signs, and the function of the wall shown in Figure 2 is the same as that of the wall shown in Figure 1. The main difference is that the outer facing layer is comprised of an outer layer 3a, an insulating layer 3b and an inner layer 3c which forms the inner side of the existing wall, which has been supplemented in accordance with the invention.

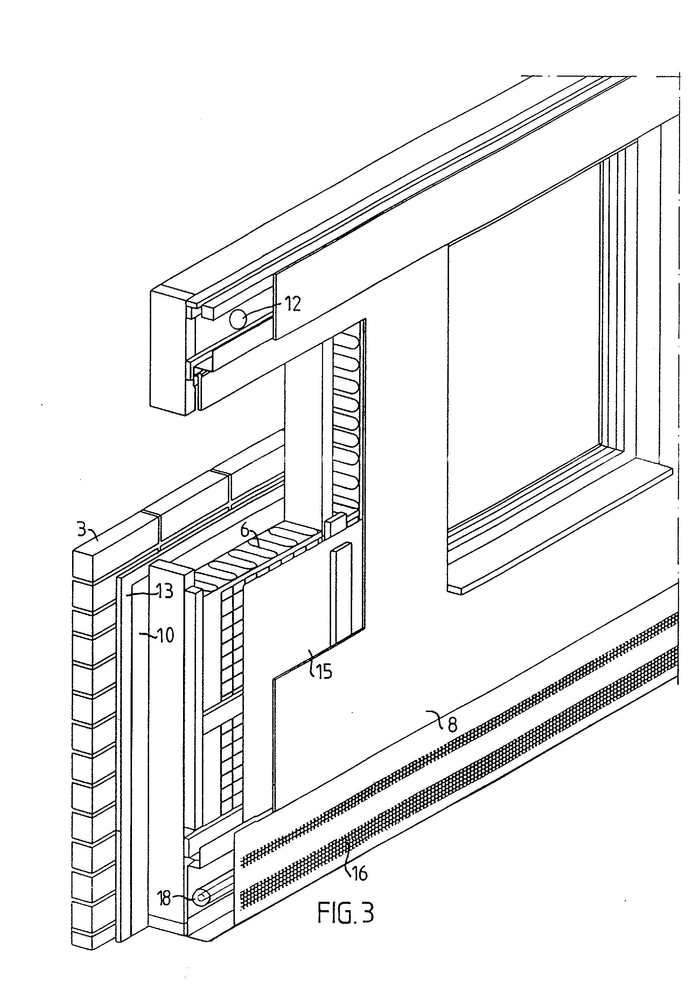

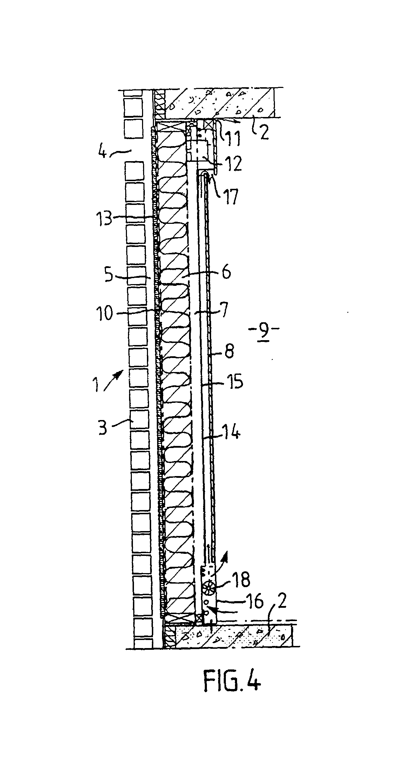

Figures 3 and 4 illustrate an inventive external wall 1, wherein those parts that find correspondence in Figures 1 and 2 have been identified with the same reference signs. In the case of the embodiment illustrated in Figures 3 and 4, the distribution layer 10 is disposed on the outside of the insulating layer 6, instead of on the inside thereof. In this case, the outer layer 13 is located outwardly of the distribution layer 10 and functions as a first filter for extracting coarse particles from the air, so as to prevent clogging of the fine perforations in the distribution layer 10.

The external wall 1 of the embodiment shown in Figures 3 and 4 is also provided with a third air gap 14 arranged between the inner air gap 7 and the inner facing layer 8. Located between the inner air gap 7 and the third air gap 14 is a thin intermediate layer 15 which is comprised of a material that has good thermal conductivity, for instance metal. The third air gap 14 is completely separate from the inner air gap 7 and the bottom of the gap 14 communicates with the building interior 9 through an inlet opening 16. The third air gap 14 is also open at the top of the gap, so as to form an outlet opening 17 to the building interior 9. Also provided in the lower part of the third air gap 14 is at least one heating device 18 which functions to heat air that flows in through the inlet opening 16 and then rises up through the third air gap 14 and flows back into the building interior 9 through the outlet opening 17. In this way, there is produced a warm air flow through the third air gap 14, meaning that the inner facing layer 8 will be kept at a suitable temperature, therewith further reducing the risk of draughts or other discomfort in cold weather. The intermediate layer 15, which has good thermal conductivity, also contributes to further heating the ventilation air in the inner air gap 7, prior to said air exiting through the outlet opening 11.

It will be understood that the aforedescribed embodiments of the inventive external wall can be modified in different ways within the scope of the invention. For instance, the insulating layer 6 can be made of so-called loose wool, i.e. mineral wool which is comprised of loose fibres in the absence of any binder. This alleviates the problem of possible departure of binder residues from the insulating layer 6. However, when loose wool is used, it is necessary to provide some form of supportive layer (not shown) on both sides of the insulating layer 6, said supportive layers assisting the insulating layer 6 in retaining its correct form.

## Claims

1. A heat-insulating external wall (1) for a building, said wall including an outer lining or facing layer (3), an outer air gap (5) located inwardly of the outer facing layer (3), an insulating layer (6) located inwardly of the outer air gap (5), an inner air gap (7) located inwardly of the insulating layer (6), and an inner facing layer (8) located inwardly of the inner air gap (7), wherein the outer air gap (5) communicates with the ambient air through at least one inlet opening (4) in the outer facing layer (3), and the inner air gap (7) communicates with the building interior (9) through at least one outlet opening (11) in the inner facing layer (8), and wherein the insulating layer (6) is comprised of a material which is air-permeable at least in a direction away from the outer air gap towards the inner air gap (7),
**characterized** in that the insulating layer (6) is comprised of a material which will function as a filter for extracting particles from the passing air; in that a distribution layer (10) is disposed on the outside and/or the inside of the insulating layer (6), said distribution layer (10) being comprised of a generally air-impermeable material and being provided with a large number of uniformly distributed perforations or comprising a material of correctly balanced porosity; and in that a flow control device (12) is arranged in the outlet opening (11) or adjacent thereto for maintaining a generally constant flow of air through the wall (1) independently of the pressure difference between the outside of the wall (1) and its inside.

2. A wall according to Claim 1, **characterized** in that the insulating layer (6) is comprised of mineral wool sheets.

3. A wall according to Claim 1, **characterized** in that the insulating layer (6) is comprised of mineral wool in the form of loose wool, wherein a supportive layer is provided on each side of the insulating layer (6) as a support for the loose wool.

4. A wall according to any one of Claims 1-3,
**characterized** in that the flow control device (12) is a pressure controlled valve which adjusts the throughflow area automatically in dependence on the pressure difference between the outside of the wall (1) and its inside.

5. A wall according to any one of Claims 1-4,
**characterized** in that the distribution layer (10) is comprised of a sheet which is perforated with holes that provide a suitably balanced air permeability.

6. A wall according to any one of Claims 1-5,
**characterized** in that a filtering layer (13) is arranged outside the distribution layer (10) for extracting coarse particles from the passing air.

7. A wall according to any one of Claims 1-6,
**characterized** in that a thin intermediate layer (15) and a third air gap (14) are provided between the inner air gap (7) and the inner facing layer (8), wherein both the intermediate layer and the third air gap communicate with the building interior (9) at the top of said layer and said gap.

8. A wall according to Claim 7, **characterized** in that the intermediate layer (15) is comprised of a material of good thermal conductivity, for instance metal.

9. A wall according to Claim 7 or 8, **characterized** in that a heating device (18) is mounted in the third air gap.

## Patentansprüche

1. Wärmeisolierende Außenwand (1) für ein Gebäude, wobei die Wand eine außenliegende Verkleidungs- oder Deckschicht (3) enthält sowie einen äußeren Luftspalt (5), der innerhalb der äußeren Deckschicht (3) angeordnet ist, eine Isolierungsschicht (6), die innerhalb des äußeren Luftspaltes (5) angeordnet ist, einen inneren Luftspalt (7), der innerhalb der Isolierungsschicht (6) angeordnet ist, und eine innere Deckschicht (8), die innerhalb des inneren Luftspaltes (7) angeordnet ist, wobei der äußere Luftspalt (5) mit der Umgebungsluft durch wenigstens eine Einlaßöffnung (4) in der äußeren Deckschicht (3) in Verbindung steht und der innere Luftspalt (7) mit dem Inneren (9) des Gebäudes durch wenigstens eine Auslaßöffnung (11) in der inneren Deckschicht (8) in Verbindung steht, und wobei die Isolierungsschicht (6) aus einem Material besteht, das wenigstens in einer Richtung weg von dem äußeren Luftspalt zum inneren Luftspalt (7) hin luftdurchlässig ist,
dadurch gekennzeichnet, daß die Isolierungsschicht (6) aus einem Material besteht, das als ein Filter wirkt, der Partikel aus der vorbeiströmenden Luft herausnimmt, daß auf der Außenseite und/oder Innenseite der isolierenden Schicht (6) eine Verteilschicht (10) angeordnet ist, wobei die Verteilschicht (10) aus einem allgemein luftundurchlässigen Material besteht und mit einer großen Anzahl von gleichmäßig verteilten Löchern versehen ist oder ein Material mit gut ausgeglichener Porosität enthält, und daß eine Durchflußsteuervorrichtung (12) in der Auslaßöffnung (11) oder in deren Nähe angeordnet ist, um unabhängig von der Druckdifferenz zwischen der Außenseite der Wand (1) und ihrer Innenseite einen allgemein konstanten Luftstrom durch die Wand (1) aufrecht zu erhalten.

2. Wand nach Anspruch 1, dadurch gekennzeichnet, daß die Isolierungsschicht (6) aus Mineralwolleplatten besteht.

3. Wand nach Anspruch 1, dadurch gekennzeichnet, daß die Isolierungsschicht (6) aus Mineralwolle in der Form von loser Wolle besteht, wobei eine tragende Schicht als ein Träger für die lose Wolle auf jeder Seite der Isolierungsschicht (6) vorgesehen ist.

4. Wand nach einem der Ansprüche 1 bis 3, dadurch gekennzeichnet, daß die Durchflußsteuervorrichtung (12) ein druckgesteuertes Ventil ist, welches die Durchflußfläche automatisch in Abhängigkeit von der Druckdifferenz zwischen der Außenseite der Wand (1) und ihrer Innenseite einstellt.

5. Wand nach einem der Ansprüche 1 bis 4, dadurch gekennzeichnet, daß die Verteilschicht (10) aus einer Platte besteht, die von Löchern durchbrochen ist, die eine geeignet ausgeglichene Luftdurchlässigkeit bereitstellen.

6. Wand nach einem der Ansprüche 1 bis 5, dadurch gekennzeichnet, daß außerhalb der Verteilschicht (10) eine Filterschicht (13) angeordnet ist, um Grobpartikel aus der vorbeiströmenden Luft herauszunehmen.

7. Wand nach einem der Ansprüche 1 bis 6, dadurch gekennzeichnet, daß zwischen dem inneren Luftspalt (7) und der inneren Deckschicht (8) eine dünne Zwischenschicht (15) und ein dritter Luftspalt (14) vorgesehen sind, wobei sowohl die Zwischenschicht als auch der dritte Luftspalt mit dem Inneren (9) des Gebäudes am oberen Abschnitt der Schicht und des Spaltes in Verbindung stehen.

8. Wand nach Anspruch 7, dadurch gekennzeichnet, daß die Zwischenschicht (15) aus einem Material mit guter Wärmeleitfähigkeit besteht, beispielsweise Metall.

9. Wand nach Anspruch 7 oder Anspruch 8, dadurch gekennzeichnet, daß in dem dritten Luftspalt eine Heizvorrichtung (18) angebracht ist.

## Revendications

1. Paroi extérieure de calorifugeage (1) pour un bâtiment, ladite paroi comprenant un revêtement extérieur ou une couche de parement (3), un intervalle extérieur (5) empli d'air, placé sur le côté intérieur de la couche extérieure de parement (3), une couche isolante (6) placée sur le côté intérieur de l'intervalle extérieur (5) empli d'air, un intervalle intérieur (7) empli d'air, placé sur le côté intérieur de la couche isolante (6) et une couche intérieure de parement (8) placée sur le côté intérieur de l'intervalle intérieur (7) empli d'air, l'intervalle extérieur (5) empli d'air communiquant avec l'air ambiant par au moins un trou d'entrée (4) de la couche extérieure de parement (3) et l'intervalle intérieur (7) empli d'air communiquant avec l'intérieur (9) du bâtiment par au moins un trou de sortie (11) réalisé dans la couche intérieure de parement (8) et la couche isolante (6) étant constituée d'une matière qui est perméable à l'air au moins dans un sens allant de l'intervalle extérieur empli d'air vers l'intervalle intérieur empli d'air (7),
caractérisée en ce que la couche isolante (6) consiste en une matière qui assume la fonction d'un filtre pour extraire les particules de l'air passant ; en ce qu'une couche de distribution (10) est disposée sur le côté extérieur et/ou le côté intérieur de la couche isolante (6), ladite couche de distribution (10) consistant en une matière sensiblement imperméable à l'air et qui comporte un grand nombre de perforations uniformément distribuées ou consistant en une matière ayant une porosité correctement équilibrée ; et en ce qu'un dispositif de commande d'écoulement (12) est disposé dans le trou de sortie (11) ou à son voisinage pour maintenir un flux sensiblement constant d'air à travers la paroi (1) indépendamment de la différence de pression entre l'extérieur de la paroi (1) et son intérieur.

2. Paroi selon la revendication 1, caractérisée en ce que la couche isolante (6) se compose de feuilles de laine minérale.

3. Paroi selon la revendication 1, caractérisée en ce que la couche isolante (6) consiste en laine minérale ayant la forme d'une laine lâche, une couche de support étant placée sur chaque côté de la couche isolante (6) pour former un support de la laine lâche.

4. Paroi selon l'une quelconque des revendications 1 à 3, caractérisée en ce que le dispositif de commande d'écoulement (12) est une soupape commandée par pression qui règle la superficie de passage de flux automatiquement en fonction de la différence de pression entre l'extérieur de la paroi (1) et son intérieur.

5. Paroi selon l'une quelconque des revendications 1 à 4, caractérisée en ce que la couche de distribution (10) se compose d'une feuille qui est perforée par des trous qui produisent une perméabilité à l'air convenablement équilibrée.

6. Paroi selon l'une quelconque des revendications 1 à 5, caractérisée en ce qu'une couche de filtration (13) est disposée à l'extérieur de la couche de distribution (10) pour extraire de grosses particules de l'air passant.

7. Paroi selon l'une quelconque des revendications 1-6, caractérisée en ce qu'une couche intermédiaire mince (15) et un troisième intervalle (14) empli d'air sont placés entre l'intervalle intérieur (7) empli d'air et la couche de parement intérieure (8), aussi bien la couche intermédiaire que le troisième intervalle empli d'air communiquant avec l'intérieur du bâtiment (9) au haut de ladite couche et dudit intervalle.

8. Paroi selon la revendication 7, caractérisée en ce que la couche intermédiaire (15) se compose d'une matière à bonne conductibilité thermique, par exemple d'un métal.

9. Paroi selon la revendication 7 ou 8, caractérisée en ce qu'un dispositif de chauffage (18) est monté dans le troisième intervalle empli d'air.
